# EUROPÄISCHE PATENTSCHRIFT

(11) **EP 2 122 173 B1**
(45) Veröffentlichungstag und Bekanntmachung des Hinweises auf die Patenterteilung: **19.04.2017**
(21) Anmeldenummer: 07764900.2
(22) Anmeldetag: 28.06.2007
(51) Int. Cl.: F04C 2/08, F04C 2/18, F04C 15/00

(54) **SCHMIERRITZEL UND SCHMIEREINRICHTUNG**
LUBRICATING PINION AND LUBRICATING DEVICE
PIGNON DE LUBRIFICATION ET DISPOSITIF DE LUBRIFICATION

(30) Priorität: 16.03.2007 DE 202007004103 U
(43) Veröffentlichungstag der Anmeldung: 25.11.2009
(73) Patentinhaber: SKF Lubrication Systems Germany GmbH, 69190 Walldorf (DE)
(72) Erfinder: PALUNCIC, Zdravko, 67067 Ludwigshafen (DE); SCHÖNFELD, Andreas, 68789 St. Leon-Rot (DE)
(74) Vertreter: Keil & Schaafhausen Patent- und Rechtsanwälte PartGmbB
(86) Internationale Anmeldenummer: PCT/EP2007/005709
(87) Internationale Veröffentlichungsnummer: WO 2008/113396

(56) Entgegenhaltungen:
- DE-A1- 2 509 488
- DE-U1- 20 121 923
- DE-U1-202006 011 330
- GB-A- 1 209 792
- JP-A- 2001 099 071
- JP-A- 2003 207 028
- US-A- 1 836 439
- US-A- 4 696 201
- US-A- 5 337 626
- US-A- 5 908 067

## Beschreibung

Die Erfindung betrifft ein Schmierritzel und eine Schmiereinrichtung zum Aufbringen eines beispielsweise durch eine Schmierstoffleitung von einer Schmierstoffpumpe aus einem Vorratsbehälter geförderten Schmierstoffes, insbesondere Fett, auf wenigstens ein Zahnrad, wobei das Schmierritzel eine Außenverzahnung aufweist, in welche wenigstens ein Schmierstoffauslass mündet.

Eine derartige Einrichtung zum Abschmieren von Zahnrädern ist beispielsweise aus der DE 201 21 923 U1 bekannt. Das dort als Zahnkranzmodul bezeichnete Schmierritzel hat die Außenkontur eines herkömmlichen Zahnrads mit Evolventenverzahnung. Ein verbessertes Schmierritzel der oben genannten Art ist auch aus der DE 20 2006 011 330 U1 bekannt.

Aufgabe der vorliegenden Erfindung ist es demgegenüber, ein Schmierritzel und eine Schmiereinrichtung der eingangs genannten Art bereitzustellen, welche besonders einfach und kostengünstig herstellbar sind.

Diese Aufgabe wird erfindungsgemäß durch ein Schmierritzel mit den Merkmalen des Anspruchs 1, sowie ein Verfahren zur Herstellung eines solchen nach Anspruch 15 gelöst, wobei das Schmierritzel aus wenigstens zwei entlang einer vorzugsweise radialen Teilungsebene miteinander verbindbaren Schmierritzelteilen aufgebaut ist, wobei in der Teilungsebene wenigstens ein Schmierstoffkanal verläuft, der mit dem wenigstens einen Schmierstoffauslass verbindbar ist. Die Schmierstoffversorgung erfolgt bei einem Schmierritzel vorzugsweise über eine zentrale, bspw. in einer Welle ausgebildete Schmierstoffzuführung, wobei der Schmierstoff innerhalb des Schmierritzel zunächst bspw. radial von innen nach außen und dann auch axial verteilt wird. Hierzu ist es erforderlich, viele Bohrungen und/oder Kanäle in dem Schmierritzel auszubilden, die teilweise nur sehr
schwer herstellbar sind. Der Erfindung liegt der Gedanke zugrunde, dass die Ausbildung von bspw. radial verlaufenden Kanälen zu den einzelnen Zähnen dadurch deutlich vereinfacht werden kann, wenn diese Kanäle aus zwei Kanalhälften zusammengesetzt sind, die miteinander verbindbar sind. Hierzu sind erfindungsgemäß bspw. zwei Schmierritzelteile vorgesehen, die entlang einer Teilungsebene derart miteinander verbindbar sind, dass Schmiermittelkanäle in der Teilungsebene verlaufen.

Eine besonders kostengünstige Herstellung eines Schmierritzels wird dadurch ermöglicht, dass dieses aus zwei zumindest im Wesentlichen baugleichen Schmierritzelteilen aufgebaut ist. Ein gleicher Aufbau der miteinander zu verbindenden Schmierritzelteile senkt nicht nur die Herstellungskosten, da weniger verschiedene Werkzeuge zur Herstellung der Schmierritzelteile vorgehalten werden müssen, sondern ist auch hinsichtlich der Lagerhaltungskosten vorteilhaft, da die Anzahl der verschiedenen Bauteile, die zum Aufbau eines Schmierritzels erforderlich sind, äußerst gering gehalten werden kann.

Die Schmierritzelteile können bspw. mittels einer Verschraubung miteinander verbunden werden. Alternativ oder zusätzlich hierzu ist es auch möglich, einen bspw. hülsenartige Nabe vorzusehen, über welche die Schmierritzelteile miteinander verbindbar sind. Weiter können auch Vorsprünge und Vertiefungen an den Schmierritzelteilen derart vorgesehen sein, dass die Vorsprünge passgenau in die Vertiefungen eingreifen, um die Schmierritzelteile miteinander zu verbinden. Dies kann auch eine Zentrierung oder Ausrichtung der Teile zueinander erleichtern.

Wenn die Oberfläche der Schmierritzelteile im Bereich der Außenverzahnung eine Profilierung aufweist, bilden sich bspw. kleine Taschen oder Vertiefungen, in denen sich Schmierstoff ansammeln kann. Dies ermöglicht eine gewisse Notschmierung, wenn bspw. die Schmierstoffzufuhr unterbrochen sein sollte.

In den Schmierritzelteilen sind erfindungsgemäß radial verlaufende und axial verlaufende Kanäle vorgesehen, wobei die axial verlaufenden Kanäle über wenigstens einen Schmierstoffauslass mit der Oberfläche der Außenverzahnung in Verbindung stehen. Auch hier können Taschen oder dgl. Schmierstoffreservoirs gebildet werden, die eine gewissen Notschmierung ermöglichen.

Nach einer besonders bevorzugten Ausführungsform der Erfindung weisen die Zähne der Außenverzahnung des Schmierritzels ein gegenüber einer Evolventenverzahnung gekürztes Zahnflankenprofil auf, wobei die Kopfhöhe und/oder die Breite der Zahnflanken in Umfangsrichtung in einem radial außerhalb des Teilkreises gelegenen Zahnflankenabschnitt verringert sind. Für die verringerte Kopfhöhe wird insbesondere die bisher vorhandene Zahnspitze abgenommen. Die Kopfhöhe errechnet sich dabei aus der Hälfte der Differenz des Außendurchmessers des Schmierritzels und des Teilkreisdurchmessers des Schmierritzels. Mit anderen Worten bezeichnet die Kopfhöhe die Höhe des über den Teilkreis radial nach außen hervorstehenden Bereichs eines jeden Zahnes. Bei einer Evolventenverzahnung ist dies in der Regel ein spitz zulaufender Zahnbereich. Wenn nun diese Kopfhöhe gegenüber der Kopfhöhe einer Evolventenverzahnung verringert wird, dringen die Zähne des Schmierritzels weniger tief in den Fußbereich des zu schmierenden Zahnrads ein. Überraschend hat sich herausgestellt, dass hierdurch eine erheblich bessere Verteilung des Schmiermittels in den tribologisch stärker beanspruchten Bereichen erreicht wird und insbesondere eine ungewollte Ansammlung des Schmiermittels im Fußbereich des zu schmierenden Zahnrads vermieden wird. Gleiches gilt für eine Verringerung der Breite der Zahnflanken in Umfangsrichtung in einem radial außerhalb des Teilkreises gelegenen Zahnflankenabschnitt, wodurch sich ebenfalls vermeiden lässt, dass der Schmierstoff unregelmäßig und ungleichmäßig auf das zu schmierende Zahnrad aufgetragen wird und sich insbesondere im Bereich des Zahnfußes des zu schmierenden Zahnrads ansammelt.

Vorzugsweise ist die Kopfhöhe der Zähne der Außenverzahnung des Schmierritzels gegenüber einer Evolventenverzahnung um etwa 25% bis etwa 90%, insbesondere um etwa 50% bis etwa 80% verringert. Als besonders günstig hat es sich herausgestellt, wenn die Zähne der Außenverzahnung des Schmierritzels eine gegenüber einer Evolventenverzahnung um etwa 75% verringerte Kopfhöhe aufweisen. Mit anderen Worten beträgt die Kopfhöhe nur noch etwa 25% des theoretischen Profils bei einer Evolventenverzahnung. Die Verkürzung der Zähne des Schmierritzels erfolgt dabei nur in dem radial außerhalb des Teilkreises liegenden Bereich, da bei einer Verkürzung der Zähne bis auf einen unterhalb des Teilkreises liegenden Wert das Schmierritzel nicht mehr von dem zu schmierenden Zahnrad mitgenommen würde.

Es ist auch möglich, dass die Zähne der Außenverzahnung des Schmierritzels eine gegenüber einer Evolventenverzahnung um etwa 25% bis 50% verringerte Zahnhöhe aufweisen, insbesondere kann die Außenverzahnung eine um etwa 25% verringerte Kopfhöhe aufweisen.

Das erfindungsgemäß korrigierte Profil mit einer verringerten Kopfhöhe kann auch in der Kontur der Außenverzahnung gegenüber einer Evolventenverzahnung verändert sein. So können die Zähne der Außenverzahnung des Schmierritzels eine abgerundete Zahnkopfkontur aufweisen. Dies kann beispielsweise durch einen größeren Radius im Bereich der Zahnkopfspitze erfolgen, der seitlich jeweils in kleinere Radien übergeht. Die Zähne der Außenverzahnung des Schmierritzels können dabei eine derart abgerundete Zahnkopfkontur aufweisen, dass die Breite der Zahnflanken in Umfangsrichtung in einem radial außerhalb des Teilkreises gelegenen Zahnflankenabschnitt gegenüber einer Evolventenverzahnung verringert ist.

Alternativ hierzu ist es jedoch auch möglich, eine beliebige andere Zahnkopfkontur der Zähne der Außenverzahnung des Schmierritzels vorzusehen. So kann die Zahnkopfkontur auch spitz ausgebildet sein und dabei insbesondere der Zahnkopfkontur einer Evolventenverzahnung ähneln.

Um eine gleichmäßige und gute Versorgung des zu schmierenden Zahnrads mit einem Schmierstoff zu ermöglichen, weist das Schmierritzel vorzugsweise mehrere von einer Schmierstoffzuleitung ausgehende Schmierstoffleitungen auf, die jeweils in wenigstens einen Schmierstoffauslass in einem der Zähne mündet. Die Schmierstoffzufuhrleitung, die über eine Schmierstoffpumpe mit einem Vorratsbehälter verbunden sein kann, ist nach einer bevorzugten Ausführungsform der Erfindung im Bereich der Achse des Schmierritzels oder in einem achsnahen Bereich des Schmierritzels angeordnet.

In Weiterbildung dieses Erfindungsgedankens ist es vorgesehen, dass in jeden Zahn des Schmierritzels wenigstens zwei Schmierstoffauslässe münden. Hierdurch wird erreicht, dass jeder Zahn des zu schmierenden Zahnrads mit Schmierstoff versorgt wird.

Um beide Zahnflanken jedes Zahnes des zu schmierenden Zahnrads mit Schmierstoff zu versorgen, ist nach einer weiteren Ausführungsform der Erfindung in jeder Zahnflanke des Schmierritzels wenigstens ein Schmierstoffauslass vorgesehen.

Wenn dabei die Auslassöffnungen des Schmierritzels im Bereich des Teilkreises und/oder in einem Bereich zwischen dem Teilkreis und dem Fußkreis in die Zahnflanken münden, wird das zu schmierende Zahnrad an den tribologisch höchst beanspruchten Stellen abgeschmiert.

Vorzugsweise münden die Auslassöffnungen in den Zahnflanken in Quernuten bzw. Kanäle, welche in axialer Richtung des Schmierritzels verlaufen und sich über fast die gesamte axiale Breite der Zahnflanken erstrecken. Hierdurch wird eine Verteilung des Schmierstoffes im Wesentlichen über die gesamte Breite des Schmierritzels sowie des zu schmierenden Zahnrades erreicht.

Erfindungsgemäß werden die beiden Schmierritzelteile aus dem gleichen Werkzeug gegossen und/oder gespritzt. Dabei handelt es sich bei den Schmierritzelteilen vorzugsweise um Kunststoffformteile, insbesondere solche aus Polyurethan (PU).

Weiter betrifft die Erfindung eine Schmiereinrichtung mit wenigstens einem Schmierritzel der oben beschriebenen Art.

Die Erfindung betrifft weiter ein Getriebe mit wenigstens einem zu schmierenden Zahnrad, wobei das Schmierritzel der Schmieranlage mit wenigstens einem Zahnrad kämmt. Die vorliegende Erfindung ist dabei nicht auf die Abschmierung eines als Stirnrad ausgebildeten Zahnrads beschränkt, sondern kann auch bei Kegelrädern, Schraubenrädern, Kronrädern, Schnecken, Zahnstangen oder elliptischen Zahnrädern eingesetzt werden, die dann mit dem Schmierritzel kämmen.

Die Erfindung wird nachfolgend anhand eines Ausführungsbeispiels und unter Bezugnahme auf die Zeichnung näher erläutert. Dabei bilden alle beschriebenen und/oder bildlich dargestellten Merkmale für sich oder in beliebiger Kombination den Gegenstand der Erfindung, unabhängig von ihrer Zusammenfassung in den Ansprüchen oder deren Rückbeziehung.

Es zeigen schematisch:
- Fig. 1: in Perspektivansicht ein erfindungsgemäßes Zahnritzel vor dem Zusammenbau,
- Fig. 2: eine Vorderansicht eines Schmierritzelteils nach Fig. 1,
- Fig. 3: eine Draufsicht auf das Schmierritzelteil nach Fig. 2,
- Fig. 4: eine Rückansicht des Schmierritzelteils nach Fig. 2,

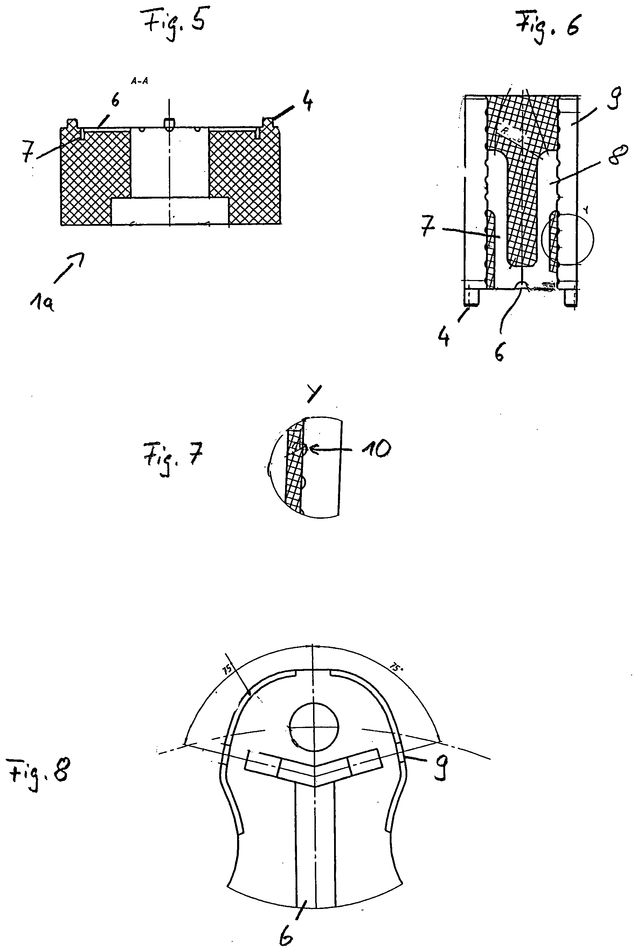

- Fig. 5: einen Schnitt durch das Schmierritzelteil nach Fig. 2,
- Fig. 6: vergrößert einen Schnitt durch ein Detail aus Fig. 4,
- Fig. 7: vergrößert ein Detail aus Fig. 6,
- Fig. 8: vergrößert einen Ausschnitt aus Fig. 4 und
- Fig. 9: einen Schnitt durch ein zusammengebautes Schmierritzel nach Fig. 1

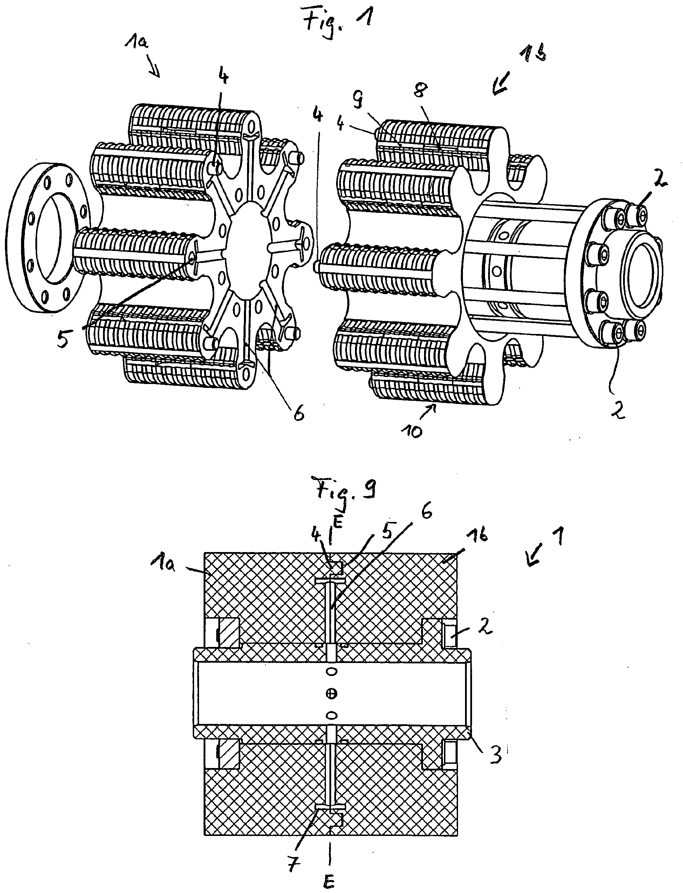

Das in den Figuren dargestellte Schmierritzel 1 ist aus zwei Schmierritzelteilen 1 a, 1 b aufgebaut, die baugleich sind. Die Schmierritzelteile 1 a, 1 b sind entlang einer in Fig. 9 gezeigten Teilungsebene miteinander verbindbar, wobei diese Teilungsebene E senkrecht auf der Rotationsachse des Schmierritzel 1 steht, d. h. die Teilungsebene E verläuft radial.

Wie aus den Fig. 1 und 9 ersichtlich ist, sind die beiden Schmierritzelteile 1 a, 1 b über mehrere Schrauben 2 sowie eine zentrale, hülsenförmige Nabe 3 miteinander verbunden. Darüber hinaus sind im Bereich der Teilungsebene E Vorsprünge 4 und entsprechende Vertiefungen 5 vorgesehen, so dass die beiden Schmierritzelteile 1 a, 1 b zunächst zentriert aufeinander gesteckt werden können.

Wie aus den Figuren weiter ersichtlich ist, verlaufen innerhalb der Teilungsebene E in den einander zugewandten stirnseitigen Flächen der Schmierritzelteile 1 a und 1 b radiale Kanäle 6, die über entsprechende Öffnungen in der Nabe 3 mit einer zentralen Schmierstoffversorgung (in den Figuren nicht gezeigt) in Verbindung stehen. Die radialen Kanäle 6 werden folglich jeweils aus zwei Kanalhälften gebildet, die in jedem der Schmierritzelteile 1 a bzw. 1 b vorgesehen sind. Ausgehend von diesen radialen Kanälen 6 zweigen auch in axialer Richtung Kanäle 7 ab, welche in Schmierstoffauslässe 8 in den Zahnflanken des Schmierritzels 1 münden.

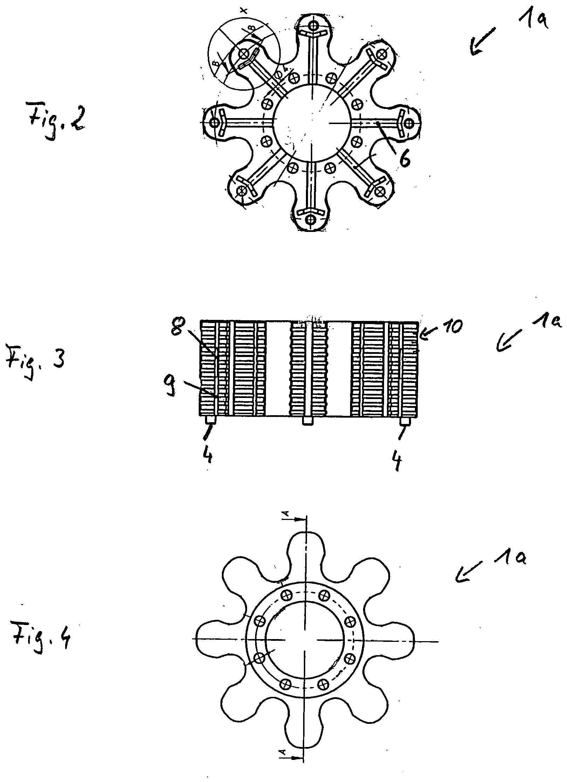

In den Figuren 1 und 3 ist gezeigt, dass in axialer Richtung in den Zahnflanken jeweils Quernuten bzw. Kanäle 9 verlaufen, welche einerseits mit den Schmierstoffauslässen 8 in Verbindung stehen und andererseits nach außen offen sind, um den Schmierstoff an zu schmierenden Zahnräder oder dgl. abzugeben. Diese Quernuten oder Kanäle 9 erstrecken sich bspw. über die gesamte axiale Länge des Schmierstoffritzels 1.

Die Außenfläche der Zahnflanken ist mit einer Profilierung 10 versehen, wodurch Taschen oder dgl. gebildet werden, in denen der Schmierstoff aufgenommen werden kann. In gleicher Weise dienen auch die axial verlaufenden Kanäle 7 und die Quernuten oder Kanäle 9 der Aufnahme von Schmierstoff, um bei dem Ausfall der Schmierstoffversorgung eine Notschmierung zu ermöglichen.

### Bezugszeichenliste:

- 1: Schmierritzel
- 1a, 1b: Schmierritzelteil
- 2: Schraube
- 3: Nabe
- 4: Vorsprung
- 5: Vertiefung
- 6: radialer Kanal
- 7: axialer Kanal
- 8: Schmierstoffauslass
- 9: Quernut/Kanal
- 10: Profilierung

- E: Teilungsebene

## Patentansprüche

1. Schmierritzel, für eine Schmiereinrichtung, zum Aufbringen eines Schmierstoffes auf wenigstens ein Zahnrad, wobei das Schmierritzel (1) eine Außenverzahnung aufweist, in welche wenigstens ein Schmierstoffauslass (8) mündet, wobei das Schmierritzel (1) aus wenigstens zwei jeweils entlang einer vorzugsweise radialen Teilungsebene (E) miteinander verbindbaren Schmierritzelteilen (1a, 1b) aufgebaut ist, wobei in der Teilungsebene (E) wenigstens ein Schmierstoffkanal (6) verläuft, der mit dem wenigstens einen Schmierstoffauslass (8) verbindbar ist, **dadurch gekennzeichnet, dass** die wenigstens zwei Schmierritzelteile (1a, 1b) gegossene und/oder gespritzte Kunststoffformteile sind.

2. Schmierritzel nach Anspruch 1, **dadurch gekennzeichnet, dass** das Schmierritzel (1) aus zwei zumindest im Wesentlichen baugleichen Schmierritzelteilen (1a, 1b) aufgebaut ist.

3. Schmierritzel nach einem der Ansprüche 1 oder 2, **dadurch gekennzeichnet, dass** die Schmierritzelteile (1a, 1b) mittels einer Verschraubung (2) und/oder einer gemeinsamen Nabe (3) miteinander verbindbar sind.

4. Schmierritzel nach einem der vorhergehenden Ansprüche, **dadurch gekennzeichnet, dass** die Schmierritzelteile (1a, 1b) mittels aneinander angepasster Vorsprünge (4) und Vertiefungen (5) miteinander verbindbar sind.

5. Schmierritzel nach einem der vorhergehenden Ansprüche, **dadurch gekennzeichnet, dass** die Oberfläche der Schmierritzelteile (1a, 1b) im Bereich der Außenverzahnung eine Profilierung (10) aufweist.

6. Schmierritzel nach einem der vorhergehenden Ansprüche, **dadurch gekennzeichnet, dass** in den Schmierritzelteilen (1a, 1b) radial verlaufende und axial verlaufende Kanäle (7) vorgesehen sind, wobei die axial verlaufenden Kanäle (7) über jeweils wenigstens einen Schmierstoffauslass (8) mit der Oberfläche der Außenverzahnung in Verbindung stehen.

7. Schmierritzel nach einem der vorhergehenden Ansprüche, **dadurch gekennzeichnet, dass** die Zähne der Außenverzahnung des Schmierritzels (1) ein gegenüber einer Evolventenverzahnung gekürztes Zahnflankenprofil aufweisen, wobei die Kopfhöhe und/oder die Breite der Zahnflanken in Umfangsrichtung in einem radial außerhalb des Teilkreises gelegenen Zahnflankenabschnitt verringert sind.

8. Schmierritzel nach Anspruch 7, **dadurch gekennzeichnet, dass** die Zähne der Außenverzahnung des Schmierritzels (1) eine derart abgerundete Zahnkopfkontur aufweisen, dass die Breite der Zahnflanken in Umfangsrichtung in einem radial außerhalb des Teilkreises gelegenen Zahnflankenabschnitt gegenüber einer Evolventenverzahnung verringert ist.

9. Schmierritzel nach Anspruch 7 oder 8, **dadurch gekennzeichnet, dass** die Zähne der Außenverzahnung des Schmierritzels (1) eine spitze Zahnkopfkontur aufweisen.

10. Schmierritzel nach einem der vorhergehenden Ansprüche, **dadurch gekennzeichnet, dass** die Schmierstoffauslässe (8) durch eine Quernut oder einen Kanal (9), welcher in axialer Richtung des Schmierritzels (1) verläuft, verbunden sind.

11. Schmierritzel nach einem der Ansprüche 1 bis 10, **dadurch gekennzeichnet, dass** wenigstens einige der Schmierstoffauslässe (8) im Bereich des Teilkreises und/oder in einem Bereich zwischen dem Teilkreis und dem Fußkreis in die Zahnflanken des Schmierritzels (1) münden.

12. Schmierritzel nach einem der Ansprüche 1 bis 11, **dadurch gekennzeichnet, dass** die wenigstens zwei Schmierritzelteile (1a, 1b) aus Polyurethan (PU) bestehen.

13. Schmiereinrichtung mit wenigstens einem Schmierritzel (1) nach einem der vorhergehenden Ansprüche.

14. Getriebe mit wenigstens einem Zahnrad (2), wobei ein Schmierritzel (1) nach einem der Ansprüche 1 bis 12 mit wenigstens einem Zahnrad kämmt.

15. Verfahren zur Herstellung eines Schmierritzels nach Anspruch **1 dadurch gekennzeichnet, dass** die wenigstens zwei Schmierritzelteile (1a, 1b) als Kunststoffformteile aus dem gleichen Werkzeug gegossen und/oder gespritzt werden.

## Claims

1. A lubricating pinion for a lubricating device for applying a lubricant onto at least one gear wheel, wherein the lubricating pinion (1) has an external tooth system into which at least one lubricant outlet (8) opens out, wherein the lubricating pinion (1) is constructed from at least two lubricating pinion parts (1a, 1b) that can be connected to one another along a preferably radial parting plane (E), wherein at least one lubricant channel (6) runs in the parting plane (E) and can be connected to the at least one lubricant outlet (8), **characterized in that** the at least two lubricating pinion parts (1a, 1b) are molded and/or injection-molded plastic moldings.

2. The lubricating pinion according to claim 1, **characterized in that** the lubricating pinion (1) is constructed from two lubricating pinion parts (1a, 1b) that are designed at least in a substantially identical manner.

3. The lubricating pinion according to any one of claims 1 or 2, **characterized in that** the lubricating pinion parts (1a, 1b) can be connected to one another by means of a screw connection and/or a common hub (3).

4. The lubricating pinion according to any one of the preceding claims, **characterized in that** the lubricating pinion parts (1a, 1b) can be connected to one another by means of projections (4) and indentations (5) that are adapted to one another.

5. The lubricating pinion according to any one of the preceding claims, **characterized in that** the surface of the lubricating pinion part (1a, 1b) has a profiling (10) in the region of the external tooth system.

6. The lubricating pinion according to any one of the preceding claims, **characterized in that** radially extending and axially extending channels (7) are provided in the lubricating pinion parts (1a, 1b), wherein the axially extending channels (7) communicate with the surface of the external tooth system in each case via at least one lubricant outlet (8).

7. The lubricating pinion according to any one of the preceding claims, **characterized in that** the teeth of the external tooth system of the lubricating pinion (1) has a tooth flank profile that is shortened with respect to an involute tooth system, wherein the addendum and/or the width of the tooth flanks is reduced in the circumferential direction in a tooth flank section that lies radially outside of the pitch circle.

8. The lubricating pinion according to claim 7, **characterized in that** the teeth of the external tooth system of the lubricating pinion (1) has a tooth tip contour that is rounded in such a manner that the width of the tooth flanks is reduced in the circumferential direction with respect to an involute tooth system in a tooth flank section that lies radially outside of the pitch circle.

9. The lubricating pinion according to claim 7 or 8, **characterized in that** the teeth of the external tooth system of the lubricating pinion (1) have a pointed tooth tip contour.

10. The lubricating pinion according to any one of the preceding claims, **characterized in that** the lubricant outlets (8) are connected by a transverse groove or a channel (9) which runs in the axial direction of the lubricating pinion (1).

11. The lubricating pinion according to any one of claims 1 to 10, **characterized in that** at least some of the lubricant outlets (8) open out in the region of the pitch circle and/or in a region between the pitch circle and the root circle into the tooth flanks of the lubricating pinion (1).

12. The lubricating pinion according to any one of claims 1 to 11, **characterized in that** the at least two lubricating pinion parts (1a, 1b) are made of polyurethane (PU).

13. A lubricating device comprising at least one lubricating pinion (1) according to any one of the preceding claims.

14. A gear box comprising at least one gear wheel (2), wherein a lubricating pinion (1) according to any one of claims 1 to 12 meshes with at least one gear wheel.

15. A method for manufacturing a lubricating pinion according to claim 1, **characterized in that** the at least two lubricating pinion parts (1a, 1b) are molded and/or injection-molded as plastic moldings from the same tool.

## Revendications

1. Pignon de lubrification pour un dispositif de lubrification, pour appliquer un lubrifiant sur au moins un engrenage, le pignon de lubrification (1) comportant une denture extérieure, dans laquelle débouche au moins une sortie de lubrifiant (8), le pignon de lubrification (1) étant constitué d'au moins deux parties de pignon de lubrification (1a, 1b) pouvant être reliées respectivement entre elles le long d'un plan de division (E) de préférence radial, au moins un conduit de lubrifiant (6) passant dans le plan de division (E) qui peut être relié avec au moins une sortie de lubrifiant (8), **caractérisé en ce qu'**au moins les deux parties de pignon de lubrification (1a, 1b) sont des pièces moulées et/ou injectées en matière plastique.

2. Pignon de lubrification selon la revendication 1, **caractérisé en ce que** le pignon de lubrification (1) est constitué d'au moins deux parties de pignon de lubrification (1a, 1b) pour l'essentiel de configuration identique.

3. Pignon de lubrification selon l'une quelconque des revendications 1 ou 2, **caractérisé en ce que** les parties de pignon de lubrification (1a, 1b) peuvent être reliées l'une à l'autre au moyen de vis (2) et/ou d'un moyeu commun (3).

4. Pignon de lubrification selon l'une quelconque des revendications précédentes, **caractérisé en ce que** les parties de pignon de lubrification (1a, 1b) peuvent être reliées l'une à l'autre au moyen de saillies (4) et de cavités (5) adaptées les unes aux autres.

5. Pignon de lubrification selon l'une quelconque des revendications précédentes, **caractérisé en ce que** la surface des parties de pignon de lubrification (1a, 1b) comporte un profilage (10) dans la zone de la denture extérieure.

6. Pignon de lubrification selon l'une quelconque des revendications précédentes, **caractérisé en ce que** des conduits (7) passant radialement et passant axialement sont prévus dans les parties de pignon de lubrification (1a, 1b) les conduits (7) passant axialement étant en liaison avec la surface de la denture extérieure par le biais respectivement d'au moins une sortie de lubrifiant (8).

7. Pignon de lubrification selon l'une quelconque des revendications précédentes, **caractérisé en ce que** les dents de la denture extérieure du pignon de lubrification (1) comportent un profil de flanc de dent raccourci par rapport à une denture à développante, la hauteur de tête et/ou la largeur des flancs de dent étant réduites dans une section de flanc de dent située radialement en dehors du cercle primitif de référence.

8. Pignon de lubrification selon la revendication 7, **caractérisé en ce que** les dents de la denture extérieure du pignon de lubrification (1) comportent un contour de tête de dent arrondie de telle manière que la largeur des flancs de dent est réduite dans le sens périphérique dans une section de flanc de dent située radialement en dehors du cercle primitif de référence.

9. Pignon de lubrification selon la revendication 7 ou 8, **caractérisé en ce que** les dents de la denture extérieure du pignon de lubrification (1) comportent un contour de tête de dent pointu.

10. Pignon de lubrification selon l'une quelconque des revendications précédentes, **caractérisé en ce que** les sorties de lubrifiant (8) sont reliées par une rainure transversale ou un canal (9), qui passe dans le sens axial du pignon de lubrification (1).

11. Pignon de lubrification selon l'une quelconque des revendications 1 à 10, **caractérisé en ce qu'**au moins plusieurs des sorties de lubrifiant (8) dans la zone du cercle primitif de référence et/ou dans une zone entre le cercle primitif de référence et le cercle de pied débouchent dans les flancs de dent du pignon de lubrification (1).

12. Pignon de lubrification selon l'une quelconque des revendications 1 à 11, **caractérisé en ce qu'**au moins les deux parties de pignon de lubrification (1a, 1b) sont en polyuréthane (PU).

13. Dispositif de lubrification avec au moins un pignon de lubrification (1) selon l'une quelconque des revendications précédentes.

14. Transmission avec au moins un engrenage (2), un pignon de lubrification (1) s'engrenant avec au moins un engrenage selon l'une quelconque des revendications 1 à 12.

15. Procédé pour la fabrication d'un pignon de lubrification selon la revendication 1, **caractérisé en ce qu'**au moins les deux parties de pignon de lubrification (1a, 1b) sont moulées et/ou injectées à partir du même outil.
